# DEMANDE DE BREVET EUROPEEN

(11) **EP 1 544 930 A2**
(43) Date de publication de la demande: **22.06.2005**
(21) Numéro de dépôt: 04354039.2
(22) Date de dépôt: 02.12.2004
(51) Int. Cl.: H01M 4/50, H01M 4/52

(54) **Accumulateur au lithium présentant à la fois un potentiel électrique et une capacité d'insertion du lithium élevés**

(30) Priorité: 18.12.2003 FR 0314865
(71) Demandeur: COMMISSARIAT A L'ENERGIE ATOMIQUE, 75752 Paris Cédex 15 (FR)
(72) Inventeur: Jouanneau-Si Larbi, Séverine, 38600 Fontaine (FR); Le Cras, Frédéric, 38470 Notre Dame de l'Osier (FR); Bourbon, Carole, 38590 Saint-Michel de Saint-Geoirs (FR); Gauthier, Gilles, 38110 La Tour Du Pin (FR)
(74) Mandataire: Hecke, G.

(57) **Abrégé**

Un accumulateur au lithium comporte au moins une première électrode comportant un matériau actif dans lequel des cations Li⁺ peuvent être insérés, une seconde électrode et un électrolyte. Le matériau actif de la première électrode comporte un composé condensé linéaire comportant au moins deux tétraèdres, respectivement de type AO₄ et A'O₄, liés par un atome d'oxygène commun. Un ion M²⁺ de métal de transition de degré d'oxydation +2 et choisi parmi Ni²⁺, Co²⁺, Mn²⁺, Fe²⁺ et Ti²⁺ est inséré dans le composé condensé linéaire et le rapport entre le nombre de cations Li⁺ pouvant être insérés dans le matériau actif et le nombre d'ions de métal de transition M²⁺ est strictement supérieur à 1. A et A' sont choisis parmi P⁵⁺, Si⁴⁺, Al³⁺, S⁶⁺, Ge⁴⁺, B³⁺.

## Description

### Domaine technique de l'invention

L'invention concerne un accumulateur au lithium comportant au moins une première électrode comportant un matériau actif dans lequel des cations Li⁺ peuvent être insérés, une seconde électrode et un électrolyte.

### État de la technique

Les accumulateurs au lithium ont tendance à remplacer des accumulateurs nickel-cadmium (Ni-Cd) ou nickel-hydrure métallique (Ni-MH) comme source d'énergie autonome, en particulier dans les équipements portables. En effet, les performances et plus particulièrement la densité d'énergie massique des accumulateurs au lithium sont supérieures à celles des accumulateurs Ni-Cd et Ni-MH.

L'électrode positive des accumulateurs au lithium est généralement constituée par des oxydes de lithium et de métal de transition tels que LiCoO₂, LiNiO₂ et LiMn₂O₄, l'électrode négative étant le plus souvent en carbone. Les capacités massiques théoriques et pratiques de ces composés, pour une tension de fonctionnement par rapport au lithium métallique de l'ordre de 4 Volts, sont respectivement de 275 mAh/g et 140 mAh/g pour LiCoO₂ et LiNiO₂ et de 148 mAh/g et 120 mAh/g pour LiMn₂O₄.

Récemment, pour augmenter le potentiel d'insertion des matériaux actifs de l'électrode positive, il a été proposé de remplacer les oxydes de lithium et de métal de transition par des matériaux ayant une structure isotype de l'olivine, par exemple LiMPO₄ ou bien par des matériaux ayant une structure de type NASICON, par exemple LiₓM₂(PO₄)₃, M étant un métal. Ce type de matériaux présente, en effet, l'avantage d'être non seulement moins coûteux mais également plus stable à l'état chargé et en présence de l'électrolyte, que les oxydes de lithium et de métal de transition usuellement utilisés. De plus, les matériaux ayant une structure isotype de l'olivine ou de type NASICON sont non toxiques.

Ainsi, le document US6391493 propose d'utiliser, comme matériau actif pour l'électrode positive d'une batterie secondaire au lithium, des composés de structure ordonnée olivine tels que LiMnPO₄, LiCoPO₄ et LiNiPO₄. Ces composés ont un potentiel d'intercalation du lithium relativement élevé mais des problèmes de structure et de stabilité vis-à-vis de l'électrolyte lors du fonctionnement de l'accumulateur au lithium, ne permettent pas d'obtenir des performances stables au cours de différents cycles de fonctionnement. De plus, ces composés ne permettent pas d'échanger, par métal de transition, plus d'un électron par ion Li⁺.

Pour augmenter la capacité d'insertion des matériaux actifs d'électrode, il a été proposé d'employer des composés dont la structure dérive d'orthosilicates de lithium ou de phosphates de lithium. Théoriquement, ce type de composés peut conduire, par métal de transition, à un échange de deux électrons par ion Li⁺, ce qui assurerait une capacité d'insertion supérieure à celle des composés actifs précédemment cités.

Le document US6085015 propose, par exemple, d'utiliser un orthosilicate dont la structure est basée sur un anion SiO₄⁴⁻ dans lequel est inséré au moins un élément de transition avec au moins deux états de valence. Le lithium peut s'insérer dans la structure ou bien la quitter de manière à compenser un changement de valence de l'élément de transition, pendant l'utilisation de la batterie. Les potentiels des couples de métaux de transition mis en jeu dans ce type de composés sont voisins de ceux des matériaux à structure isotype de l'olivine ou de type NASICON et donc des problèmes d'oxydation de l'électrolyte peuvent se produire, réduisant ainsi les performances de l'accumulateur au lithium.

### Objet de l'invention

L'invention a pour but un accumulateur au lithium présentant à la fois un potentiel électrique et une capacité d'insertion du lithium élevés, tout en conservant une bonne stabilité structurelle, et notamment par rapport à l'électrolyte.

Selon l'invention, ce but est atteint par le fait que le matériau actif comporte un composé condensé linéaire comportant au moins deux tétraèdres, respectivement de type AO₄ et A'O₄, liés par un atome d'oxygène commun et dans lesquels un ion M²⁺ de métal de transition de degré d'oxydation +2 est inséré, le rapport entre le nombre de cations Li⁺ pouvant être insérés dans le matériau actif et le nombre d'ions de métal de transition M²⁺ étant strictement supérieur à 1, A et A' étant choisis parmi P⁵⁺, Si⁴⁺, Al³⁺, S⁶⁺, Ge⁴⁺, B³⁺ et M²⁺ étant choisi parmi Ni²⁺, Co²⁺, Mn²⁺, Fe²⁺ et Ti²⁺.

Selon un développement de l'invention, le matériau actif a la formule générale (I) suivante :

LiₐX_{b}MZ_{d}(A₂O₇)ₑ(A'O₃)_{f} (I)

dans laquelle :
- X représente au moins un métal alcalin à un degré d'oxydation +1 choisi parmi Li⁺, Na⁺, K⁺,
- M représente au moins un métal de transition à un degré d'oxydation +2 choisi parmi Ni²⁺, Co²⁺, Mn²⁺, Fe²⁺, Ti²⁺,
- Z représente au moins un élément choisi parmi le groupe comprenant les ions métalliques Cu⁺, Ag⁺, Mg²⁺, Ca²⁺, Sr²⁺, Zn²⁺, V²⁺, Cu²+, Al³⁺, Ti³⁺, Cr³⁺, Fe³⁺, Mn³⁺, Ga³⁺, V³⁺, Ge⁴⁺, Sn⁴⁺, Mo⁴⁺, Ti⁴⁺, V⁴⁺, V⁵⁺, Ta⁵⁺, Nb⁵⁺ et Mo⁶⁺, les éléments chimiques O, S, F et Cl et un groupement de type A"O₄,
- A" est un cation choisi parmi P⁵⁺, Si⁴⁺, Al³⁺, S⁶⁺, Ge⁴⁺, B³⁺,
- a> 1,
- b et d ≥ 0
- et au moins e ou f > 0.

Selon une autre caractéristique de l'invention, le matériau actif est sous forme d'une nano-dispersion du composé condensé avec un additif conducteur électronique.

### Description de modes particuliers de réalisation

Un accumulateur au lithium comporte au moins des première et seconde électrodes, respectivement positive et négative, et un électrolyte. Dans l'accumulateur au lithium, au moins l'électrode positive comporte un matériau actif généralement appelé matériau d'insertion du lithium ou matériau d'intercalation du lithium.

Ainsi, des cations Li⁺ peuvent successivement être insérés dans le matériau actif dit d'insertion du lithium et le quitter, lors du fonctionnement de l'accumulateur au lithium, pendant des opérations de charge et de décharge. Le matériau actif, selon l'invention, comporte un composé condensé linéaire comportant au moins deux tétraèdres anioniques, respectivement de type AO₄ et A'O₄ et liés par un sommet commun. Ainsi, chaque entité AO₄ et A'O₄ forme un tétraèdre anionique dont chaque sommet est occupé par un ion O²⁻, un ion O²⁻ étant commun aux deux tétraèdres et A et A' étant chacun placés au centre du tétraèdre correspondant. On dit également, par facilité de langage, que les deux tétraèdres AO₄ et A'O₄ sont liés par un atome d'oxygène commun.

Ledit matériau actif comporte également un ion M²⁺ de métal de transition de degré d'oxydation +2, choisi parmi Ni²⁺, Co²⁺, Mn²⁺, Fe²⁺ et Ti²⁺ et inséré dans le composé condensé. De plus, A et A' sont choisis parmi P⁵⁺, Si⁴⁺, Al³⁺, S⁶⁺, Ge⁴⁺ et B³⁺ et ils peuvent être distincts ou identiques.

Ainsi, selon l'invention, le matériau actif de l'électrode positive comporte un polyanion condensé linéaire dans lequel est inséré un ion de métal de transition M²⁺, un cation Li⁺ pouvant être inséré dans le polyanion condensé linéaire et le quitter lors du fonctionnement de l'accumulateur. Le polyanion condensé linéaire peut, par exemple, être sous la forme suivante : O₃A-O-A'O₃ ou A₂O₇ si A et A' sont identiques. Le nombre de tétraèdres mis en commun par un atome d'oxygène n'est cependant pas limité à deux. Ainsi, le polyanion condensé linéaire peut, par exemple, comporter deux tétraèdres de type AO₄, liés par un atome d'oxygène commun et un tétraèdre de type A'O₄ lié au tétraèdre AO₄ voisin, par un atome d'oxygène commun. Dans ce cas, le polyanion condensé linéaire est sous la forme suivante : O₃A-O-AO₂-O-A'O₃ également notée A₂O₇-A'O_{3'}

La présence d'un polyanion condensé dans l'électrode positive permet d'abaisser le potentiel électrique des couples de métaux de transition mis en jeu lors de l'extraction et de l'insertion des cations Li⁺, grâce à l'effet inductif moindre de ces groupements par rapport au groupement AO₄ isolé. Cependant, la présence de ce polyanion condensé pourrait être préjudiciable à la densité du composé et à la capacité spécifique d'insertion du lithium, c'est-à-dire au nombre d'électrons échangés par gramme de matériau actif.

Ainsi, pour conserver une capacité d'insertion du lithium élevée et donc de bonnes performances dans l'accumulateur au lithium, le rapport entre le nombre de cations Li⁺ pouvant être insérés dans le matériau actif et le nombre d'ions de métal de transition M²⁺ est, selon l'invention, strictement supérieur à 1, et de préférence égal à 2. De plus, le métal de transition mis en jeu dans le matériau actif est en mesure d'échanger plus d'un électron, ce qui s'accompagne d'un échange de plus d'un cation Li⁺.

Ainsi, la mise en commun d'ions dans des tétraèdres voisins ainsi que le fait que le nombre de cations Li⁺ pouvant être insérés par rapport au nombre d'ions de métal de transition dans le matériau actif soit strictement supérieur à 1 permettent d'obtenir un accumulateur au lithium présentant non seulement un potentiel électrique adapté à une bonne stabilité de l'électrolyte mais également une capacité d'insertion du lithium élevée. Ainsi, le potentiel électrique dans le matériau actif est situé entre 3,8 Volts et 5,0 Volts, et de préférence entre 4,0 Volts et 4,6 Volts, par rapport au potentiel du couple Li/Li⁺, de manière à rester élevé tout en évitant des problèmes de stabilité de l'électrolyte.

Selon un mode particulier de réalisation, le matériau actif de l'électrode positive peut comporter d'autres éléments que le composé condensé linéaire et l'ion de métal de transition. Ainsi, le matériau actif peut par exemple être représenté par la formule générale (I) suivante :

LiₐX_{b}MZ_{d}(A₂O₇)ₑ(A'O)₃)_{f} (I)

Avec a > 1, b et d ≥ 0 et au moins e ou f > 0.

Dans la formule générale (I), X représente au moins un métal alcalin à un degré d'oxydation +1 choisi parmi Li⁺, Na⁺, K⁺ tandis que Z représente au moins un élément choisi parmi le groupe comprenant les ions métalliques Cu⁺, Ag⁺, Mg²⁺, Ca²⁺, Sr²⁺, Zn²⁺, V²⁺, Cu²⁺, Al³⁺, Ti³⁺, Cr³⁺, Fe³⁺, Mn³⁺, Ga³⁺, V³⁺, Ge⁴⁺, Sn⁴⁺, Mo⁴⁺, Ti⁴⁺, V⁴⁺, V⁵⁺, Ta⁵⁺, Nb⁵⁺ et Mo⁶⁺, les éléments chimiques 0, S, F et Cl et un groupement de type A"O₄. A" est un cation choisi parmi P⁵⁺, Si⁴⁺, Al³⁺, S⁶⁺, Ge⁴⁺, B³⁺ et il peut être identique à A et/ou A' et les groupements A₂O₇ et A'O₃ représentés dans la formule générale (I) correspondent à des condensés linéaires d'au moins deux tétraèdres.

Le matériau actif de l'électrode positive de l'accumulateur au lithium peut être formé par tout type de moyens connus. A titre d'exemple, le matériau actif peut être sous la forme d'une nano-dispersion comportant le composé condensé, un additif conducteur électronique et éventuellement un liant organique. La nano-dispersion est ensuite déposée sur une feuille métallique servant de collecteur de courant. L'additif conducteur électronique peut être du carbone. Le liant organique, destiné à apporter une bonne conduction ionique et de bonnes performances mécaniques, peut, par exemple, être constitué par un polymère choisi parmi les polymères à base de méthylméthacrylate, les polymères à base d'acrylonitrile, les polymères à base de fluorure de vinylidène, les polyéthers et les polyesters.

L'électrode négative de l'accumulateur au lithium peut être constituée par tout type de matériau connu pour être employé dans les accumulateurs au lithium.

Elle peut, par exemple, être constituée par un matériau formant une source de cations Li⁺ pour l'électrode positive, l'accumulateur au lithium faisant alors partie de la filière lithium-métal. La source de lithium constituant l'électrode négative est, par exemple, choisie parmi du lithium métallique, un alliage de lithium, une nano-dispersion d'un alliage de lithium dans un oxyde de lithium, un nitrure de lithium et de métal de transition.

Dans le cas d'un accumulateur au lithium faisant partie de la filière lithium-ion, l'électrode négative n'est pas constituée par une source de lithium pour l'électrode positive mais elle est constituée par un matériau d'intercalation ou d'insertion du lithium tel que du carbone sous forme graphite ou un matériau de structure spinelle comportant du lithium et du titane. Dans ce cas, le lithium ne se trouve jamais, dans l'accumulateur au lithium, sous la forme métallique. Les cations Li⁺ font alors des allers-retours entre les deux matériaux d'insertion du lithium des électrodes négative et positive, à chaque charge et décharge de l'accumulateur. Dans ce cas, le matériau de la seconde électrode peut également être sous forme d'une nano-dispersion d'un matériau d'insertion du lithium avec un additif conducteur électronique, par exemple du carbone, et éventuellement un liant organique. La nano-dispersion est alors, de préférence, déposée sur une feuille métallique formant un collecteur de courant.

L'électrolyte de l'accumulateur au lithium selon l'invention est constitué par tout type de matériau connu. Il peut, par exemple, être constitué par un sel comportant au moins le cation Li⁺. Le sel est, par exemple, choisi parmi LiClO₄, LiAsF₆, LiPF₄, LiR_{F}SO₃, LiCH₃SO₃, LiN(R_{F}SO₂)₂, LiN(R_{F}SO₂)₃, R_{F} étant choisi parmi un atome de fluor et un groupement perfluoroalkyle comportant entre 1 et 8 atomes de carbone. Le sel est, de préférence, dissous dans un solvant polaire aprotique et il peut être supporté par un élément séparateur disposé entre les première et seconde électrodes, l'élément séparateur étant alors imbibé d'électrolyte.

Selon un premier exemple, un matériau actif pour une électrode positive d'un accumulateur au lithium est réalisé en mélangeant dans un broyeur planétaire, sous air pendant douze heures :
- 15,95 g de Na₄P₂O₇
- et 17,48 g de Ni₂P₂O₇ anhydre.
   Le mélange subit ensuite un traitement thermique pendant 15 minutes, à 600°C et sous air de manière à obtenir un produit ayant la formule générale Na₂NiP₂O₇. 1 g du produit Na₂NiP₂O₇ est ensuite mélangé avec 1,52 g de LiCl dans 80 mL d'éthanol sous agitation à 70°C pendant environ 12 heures. Le produit est ensuite rincé à l'éthanol, à l'eau puis à l'acétone par centrifugation. Puis, il est mis à sécher à l'étuve à 60°C pendant quelques heures de manière à obtenir un matériau actif ayant la formule générale Li_{1,3}Na_{0,7}Ni(P₂O₇). La capacité massique d'un tel matériau actif est de 140 mAh/g.

Dans une variante de réalisation, 1 g du produit Na₂NiP₂O₇, obtenu dans des conditions similaires à celles décrites dans le premier exemple, est ensuite mélangé avec 6,08 g de LiCl dans du pentanol sous agitation à 140°C pendant 48 heures. Le produit est ensuite rincé à l'éthanol, à l'eau puis à l'acétone par centrifugation. Puis, il est mis à sécher à l'étuve à 60°C pendant quelques heures de manière à obtenir un matériau actif ayant la formule générale Li₂Ni(P₂O₇). La capacité massique d'un tel matériau actif est de 217 mAh/g.

Dans un second exemple, un matériau actif pour l'électrode positive d'un accumulateur au lithium est réalisé en mélangeant dans un broyeur planétaire, sous air et pendant deux heures :
- 5,32 g de Na₄P₂O₇,
- 17,442 g de Ni(NO₃),6 H₂O,
- et 5,28 g de (NH₄)₂HPO₄.
   Le mélange subit ensuite un traitement thermique pendant 16 heures, à 700°C et sous air de manière à obtenir un produit ayant la formule générale Na₄Ni₃(P₂O₇)(PO₄)₂. 1 g du produit Na₄Ni₃(P₂O₇)(PO₄)₂ est ensuite mélangé avec 5,36 g de LiCl dans du pentanol sous agitation à 140°C pendant environ 48 heures. Le produit est ensuite rincé à l'éthanol, à l'eau puis à l'acétone par centrifugation. Puis, il est mis à sécher à l'étuve à 60°C pendant quelques heures de manière à obtenir un matériau actif ayant la formule générale Li₄Ni₃(P₂O₇)(PO₄)₂. La capacité massique d'un tel matériau actif est de 190 mAh/g.

Dans un troisième exemple, un matériau actif pour l'électrode positive d'un accumulateur au lithium est réalisé en mélangeant dans un broyeur planétaire, sous air et pendant douze heures :
- 7,977 g de Na₄P₂O₇,
- 8,741 g de Ni(P₂O₇),
- 7,198 g de NaH₂PO₄,
- et de 2,283 g de saccharose.
   Le mélange subit ensuite un traitement thermique pendant 15 minutes, à 700°C et sous argon de manière à obtenir un produit ayant la formule générale Na₃Ni(P₂O₇)(PO₃)/C. 1 g du produit Na₃Ni(P₂O₇)(PO₃)/C. est ensuite mélangé avec 6,69 g de LiCl dans du pentanol sous agitation à 140°C pendant environ 48 heures. Le produit est ensuite rincé à l'éthanol, à l'eau puis à l'acétone par centrifugation. Puis, il est mis à sécher à l'étuve à 60°C pendant quelques heures de manière à obtenir un matériau actif ayant la formule générale Li₃Ni(P₂O₇)(PO₃)/C. La capacité massique d'un tel matériau actif est de 160 mAh/g.

Dans un quatrième exemple, un matériau actif pour l'électrode positive d'un accumulateur au lithium est réalisé en mélangeant dans un broyeur planétaire, sous air et pendant quarante-huit heures :
- 7,47 g de NiO,
- 3,388 g de LiOH.H₂O,
- et 12,016 g de SiO_{2.}
   Le mélange subit ensuite un traitement thermique pendant 15 minutes, à 600°C sous air de manière à obtenir un produit comportant des tétraèdres de type SiO₄ en chaînes simples et ayant la formule générale Li₂Ni(SiO₃)₂. Par produit comportant des tétraèdres en chaînes simples, on entend que le produit forme des chaînes infinies de tétraèdres de type SiO₄, chaque tétraèdre comportant deux atomes d'oxygène non partagés et deux atomes d'oxygène respectivement communs aux deux autres tétraèdres voisins dans la chaîne. Le rapport entre le silicium et l'oxygène est, alors, de 1 pour 3 dans chaque tétraèdre. La capacité massique d'un tel matériau actif est de 240 mAh/g.

De tels matériaux actifs sont ainsi utilisés pour réaliser un accumulateur au lithium.

Ainsi, selon un mode particulier de réalisation d'un accumulateur au lithium classé dans la catégorie des batteries lithium-métal, l'électrode négative est constituée par du lithium métallique, sous forme d'un disque de 16 mm de diamètre et de 130 micromètres d'épaisseur déposé sur un disque de nickel servant de collecteur de courant. L'électrode positive est alors constituée d'un disque de 14 mm prélevé sur un film composite de 50 micromètres d'épaisseur. Le film composite comprend une nano-dispersion disposée sur un collecteur de courant en aluminium de 25 micromètres d'épaisseur.

La nano-dispersion comporte 80% en masse de matériau de formule générale Li₄Ni₃(P₂O₇)(PO₄)₂ réalisé tel que précédemment décrit dans le second exemple, 8% en masse de noir de carbone formant le matériau conducteur électronique et 12% en masse d'hexafluorure de polyvinylidène formant le liant organique. L'accumulateur au lithium comporte également un élément séparateur imbibé d'un sel LiPF₆ mis en solution dans du carbonate de propylène et formant l'électrolyte liquide. A 25°C, un tel accumulateur au lithium permet l'échange de 4 ions Li⁺ par unité formulaire Li₄Ni₃(P₂O₇)(PO₄)₂ dans le domaine de potentiel 2,5V-5V par rapport au potentiel du couple Li/Li⁺.

Pour un accumulateur au lithium classé dans la catégorie des batteries lithium-ion, l'électrode positive est obtenue dans des conditions analogues à celles décrites dans le mode particulier de réalisation des batteries lithium-métal, le matériau actif étant le matériau Li₃Ni(P₂O₇)(PO₃)/C réalisé tel que précédemment décrit dans le troisième exemple. L'électrode négative est constituée par un matériau composite comportant une nano-dispersion disposée sur un collecteur de courant en aluminium. La nano-dispersion comporte 80% en masse de matériau de Li₄Ti₅O₁₂, 8% en masse de noir de carbone formant le matériau conducteur électronique et 12% en masse d'hexafluorure de polyvinylidène formant le liant organique. L'accumulateur au lithium comporte également un élément séparateur imbibé d'un sel LiPF₆ mis en solution dans du carbonate de propylène et formant l'électrolyte liquide. A 25°C, un tel accumulateur au lithium permet l'échange de 2 ions Li⁺ par unité formulaire Li₃Ni(P₂O₇)(PO₃)/C dans le domaine de potentiel 0,9V-3,5V par rapport au potentiel d'intercalation du lithium dans Li₄Ti₅O₁₂, ce qui correspond au potentiel du couple Ti^{IV}/Ti^{III}.

## Revendications

1. Accumulateur au lithium comportant au moins une première électrode comportant un matériau actif dans lequel des cations Li⁺ peuvent être insérés, une seconde électrode et un électrolyte, accumulateur au lithium **caractérisé en ce que** le matériau actif comporte un composé condensé linéaire comportant au moins deux tétraèdres, respectivement de type AO₄ et A'O₄, liés par un atome d'oxygène commun et dans lesquels un ion M²⁺ de métal de transition de degré d'oxydation +2 est inséré, le rapport entre le nombre de cations Li⁺ pouvant être insérés dans le matériau actif et le nombre d'ions de métal de transition M²⁺ étant strictement supérieur à 1, A et A' étant choisis parmi P⁵⁺, Si⁴⁺, Al³⁺, S⁶⁺, Ge⁴⁺, B³⁺ et M²⁺ étant choisi parmi Ni²⁺, Co²⁺, Mn²⁺, Fe²⁺ et Ti²⁺.

2. Accumulateur au lithium selon la revendication 1, caractérisé en que le matériau actif a la formule générale (I) suivante :
LiₐX_{b}MZ_{d}(A₂O₇)ₑ(A'O₃)_{f} (I)
dans laquelle :
- X représente au moins un métal alcalin à un degré d'oxydation +1 choisi parmi Li⁺, Na⁺, K⁺,
- M représente au moins un métal de transition à un degré d'oxydation +2 choisi parmi Ni²⁺, Co²⁺, Mn²⁺, Fe²⁺, Ti²⁺,
- Z représente au moins un élément choisi parmi le groupe comprenant les ions métalliques Cu⁺, Ag⁺, Mg²⁺, Ca²⁺, Sr²⁺, Zn²⁺, V²⁺, Cu²⁺, Al³⁺, Ti³⁺, Cr³⁺, Fe³⁺, Mn³⁺, Ga³⁺, V³⁺, Ge⁴⁺, Sn⁴⁺, Mo⁴⁺, Ti⁴⁺, V⁴⁺, V⁵⁺, Ta⁵⁺, Nb⁵⁺ et Mo⁶⁺**,** les éléments chimiques O, S, F et CI et un groupement de type A"O₄,
- A" est un cation choisi parmi P⁵⁺, Si⁴⁺, Al³⁺, S⁶⁺, Ge⁴⁺, B³⁺,
- a > 1,
- b et d ≥ 0
- et au moins e ou f > 0.

3. Accumulateur au lithium selon la revendication 2, **caractérisé en ce que** A" est identique à A et/ou A'.

4. Accumulateur au lithium selon l'une quelconque des revendications 1 à 3, **caractérisé en ce que** le matériau actif est sous la forme d'une nano-dispersion du composé condensé avec un additif conducteur électronique.

5. Accumulateur au lithium selon la revendication 4, **caractérisé en ce que** l'additif conducteur est du carbone.

6. Accumulateur au lithium selon l'une des revendications 4 et 5, **caractérisé en ce que** la nano-dispersion comporte également un liant organique.

7. Accumulateur au lithium selon la revendication 6, **caractérisé en ce que** le liant organique est constitué par un polymère choisi parmi les polymères à base de méthylméthacrylate, les polymères à base d'acrylonitrile, les polymères à base de fluorure de vinylidène, les polyéthers et les polyesters.

8. Accumulateur au lithium selon l'une quelconque des revendications 1 à 7, **caractérisé en ce que** la seconde électrode comporte au moins un matériau choisi parmi du lithium métallique, un alliage de lithium, une nano-dispersion d'un alliage de lithium dans un oxyde de lithium, un matériau de structure spinelle comportant du lithium et du titane, un nitrure de lithium et de métal de transition, du carbone et un composé d'intercalation du lithium.

9. Accumulateur au lithium selon l'une quelconque des revendications 1 à 8, **caractérisé en ce que** l'électrolyte est constitué d'un sel comportant au moins le cation Li⁺.

10. Accumulateur au lithium selon la revendication 9, **caractérisé en ce que** le sel est choisi parmi LiClO₄, LiAsF₆, LiPF₄, LiR_{F}SO₃, LiCH₃SO₃, LiN(R_{F}SO₂)₂, LiN(R_{F}SO₂)_{3.}, R_{F} étant choisi parmi un atome de fluor et un groupement perfluoroalkyle comportant entre 1 et 8 atomes de carbone.

11. Accumulateur au lithium selon l'une des revendications 9 et 10, **caractérisé en ce que** l'électrolyte comporte également un solvant polaire aprotique dans lequel est dissous le sel.

12. Accumulateur au lithium selon la revendication 11, **caractérisé en ce que** l'accumulateur comporte un élément séparateur destiné à être disposé entre les première et seconde électrodes et imbibé d'électrolyte.
